# EUROPÄISCHE PATENTSCHRIFT

(11) **EP 0 518 208 B1**
(45) Veröffentlichungstag und Bekanntmachung des Hinweises auf die Patenterteilung: **13.09.1995**
(21) Anmeldenummer: 92109415.7
(22) Anmeldetag: 04.06.1992
(51) Int. Cl.: B62D 7/14

(54) **Vorrichtung zur Lenkungsumschaltung bei einem Fahrzeugkran**
Device for changing over the steering of a self-propelling crane
Dispositif pour changer la direction d'une grue automotrice

(30) Priorität: 14.06.1991 DE 4119641
(43) Veröffentlichungstag der Anmeldung: 16.12.1992
(73) Patentinhaber: KRUPP INDUSTRIETECHNIK GMBH, 47226 Duisburg (DE)
(72) Erfinder: Becker, Otto, Dipl.-Ing., W-2930 Varel (DE)

(56) Entgegenhaltungen:
- DE-A- 1 655 533
- DE-A- 3 122 575
- US-A- 4 782 906

## Beschreibung

Die Erfindung bezieht sich auf eine Vorrichtung zur Lenkungsumschaltung bei einem Fahrzeugkran mit vier oder mehr Achsen, die eine vordere, eine mittlere und eine hintere Achsanordnung bilden, wobei jede Achsanordnung eine lenkbare Achse oder mehrere gemeinschaftlich lenkbare Achsen aufweist und wobei entweder die vordere und die hintere Achsanordnung gemeinsam lenkbar sind und die mittlere Achsanordnung auf Geradeausstellung festgestellt ist oder die vordere Achsanordnung für sich und die mittlere und die hintere Achsanordnung - unabhängig von der vorderen Achsanordnung - gemeinsam lenkbar sind.

Unter "Achsanordnung" ist dabei sohwohl eine einzelne Achse mit lenkbaren Rädern als auch eine Achsgruppe, deren Räder nur gemeinschaftlich lenkbar sind, zu verstehen.

Bei Fahrzeugkranen insbesondere bei den sogenannten All-Terrain-Kranen ist zwischen zwei "Fahrzuständen" zu unterscheiden. Zum einen muß das Fahrzeug über größere Entfernungen unter normalen Straßenverkehrsbedingungen, d.h. mit hohen Anforderungen an die Fahrstabilität bewegt werden (im folgenden Fahrzustand "Straßenfahrt" genannt). Zum anderen kommt es im Kranbetrieb oder im Gelände auf enge Wendekreise und höchste Manövrierfähigkeit an. Daraus ergeben sich für Fahrzeuge mit mehr als 3 Achsen besondere Anforderungen an die Lenkung. Bei einem 4-achsigen Fahrzeugkran ergeben sich beispielsweise folgende Lenkbedingungen:
- Im Fahrbetrieb, auch als Straßenfahrt bezeichnet, d.h. wenn das Fahrzeug über größere Entfernungen bewegt wird, erfolgt die Lenkung der Räder der 1., 2. und 4. Achse mit Hilfe des Lenkrades. Die Räder der 4. Achse sind mit Rücksicht auf den Reifenverschleiß lenkbar; während die Räder der 3. Achse mit Rücksicht auf die Fahrstabilität starr bzw. arretierbar ausgeführt sein müssen.
- Im Kranbetrieb, auch als Geländefahrt bezeichnet, d.h. sowohl im Gelände als auch beim Rangierbetrieb auf festem Untergrund, sind nur die Räder der 1. und 2. Achse mittels Lenkrad lenkbar, während die Räder der 3. und 4. Achse unabhängig von der Lenkbewegung bzw. dem Lenkeinschlag der vorderen Räder mittels einer separaten Lenkung durch einen sogenannten Meisterschalter lenkbar sind. Es wird damit einerseits ein engerer Wendekreis und andererseits der sogenannte Hundegang möglich.

Bei einer bekannten gattungsgemäßen Lenkungseinrichtung ist die 4. Achse über ein mehrteiliges Lenkgestänge mit dem Lenkrad verbunden. Das Lenkgestänge weist eine an einem Lenkhebel angreifende teleskopierbare Lenkstange auf, die einerseits auf eine zum Lenken durch das Lenkrad geeignete, vorgebbare Länge durch eine Verriegelungseinheit feststellbar ist. Zum separaten Lenken der Räder der 3. und 4. Achse durch den Meisterschalter muß diese Arretierung gelöst werden, so daß sich diese Lenkstange praktisch kraftfrei teleskopartig zusammenschieben und ausziehen läßt. Um die Räder der 3. und der 4. Achse durch die Separatlenkung gemeinsam lenken zu können, sind im diesem Falle die Lenkhebel der 3. und 4. Achse in der Art hydraulisch gekoppelt, daß die Räder der 3. und 4. Achse gleichsinnige Lenkbewegungen ausführen. Zum Festsetzen der Räder der 3. Achse bei Straßenfahrt ist eine weitere Verriegelungseinheit vorgesehen.

Nachteile der bisherigen Lösung sind
- die notwendige Verriegelungen bzw. Kopplung an drei räumlich auseinanderliegenden Stellen,
- eine relativ hohe Störanfällikeit durch die Verschmutzung der Bauteile im Geländebetrieb,
- Verringerung der Präzision der hydraulischen Kopplung der 3. und 4. Achse für die Geländefahrt durch allmähliche Leckageverluste, so daß es mit der Zeit zu größer werdenden Lenkfehlern kommt, was eine Arretierung für die Straßenfahrt erschwert oder fraglich macht,
- das relativ hohe Gewicht der für die Umschaltung von Straßenfahrt auf Geländefahrt notwendigen Bauteile
- sowie der relativ hohe Steuerungs- und Verriegelungsaufwand.

Die Forderungen für ein optimales Lenkungskonzept sind wie folgt (S = Straßenfahrt; G = Geländefahrt):
bei 5 Achsen
S - Lenkung der Räder der 1., 2., 3. und 5. Achse mittels Lenkrad; Räder der 4. Achse starr
G - Lenkung der Räder der 1., 2. und 3. Achse mittels Lenkrad; Räder der 4. und 5. Achse mittels Separatlenkung,
bei 6 Achsen
S - Lenkung der Räder der 1., 2., 3., 5. und 6. Achse mittels Lenkrad; Räder der 4. Achse starr
G - Lenkung der Räder der 1., 2. und 3. Achse mittels Lenkrad; Lenkung der Räder der 4., 5. und 6 Achse mittels Separatlenkung,
bei 7 Achsen
Hier besteht der Unterschied gegenüber 6 Achsen lediglich darin, daß die Zahl der gelenkten Achsen vorn um eine größer ist.

Bei bekannten Fahrzeugkranen mit größerer Achszahl ergeben sich weitere, gravierende Nachteile wie sich zwangsweise einstellende Fehlwinkel beim Lenkeinschlag der Räder der verschiedenen Achsen. Das führt dazu daß z.B. bei einem Kran mit 5 Achsen bei Geländefahrt die Räder der 4. Achse angehohen werden mußten, damit sie keinen Bodenkontakt mehr haben. Bei einem Fahrzeug mit 6 Achsen mußten in diesem Falle sogar die Räder der Achsen 4 und 5 angehoben werden. Dies hatte in beiden Fällen eine ausgesprochen nachteilige Vergrößerung der Last auf den Rädern der übrigen Achsen zur Folge.

Aus der DE-A-31 22 575 ist eine zentrale Umschalteinheit für ein Fahrzeug mit zwei Achsgruppen bekannt. Bei diesem Fahrzeug ist die erste Achsgruppe ständig mit dem Lenkrad verbunden und die zweite, hintere Achsgruppe ist über die zentrale Umschalteinheit alternativ in Geradeausstellung mit der Achsbrücke der hinteren Achse festgestellt oder über eine Lenkübertragungsstange und das Lenkgestänge der Vorderachse mit dem Lenkrad verbunden. Eine von der ersten Achsgruppe unabhängige Lenkung der zweiten Achsgruppe ist nach dieser Schrift ebensowenig vorgesehen wie ein Zusammenhang mit einer dritten Achsgruppe.

Aus der US-A-4 782 906 ist ferner noch ein dreiachsiges Radfahrzeug bekannt, dessen Räder einzeln über eine aus Lenkhebel und Lenkstange bestehende Verbindung mit einer Lenkanordnung bzw. einem Lenkantrieb verbunden sind, die bzw. der durch ein Lenkmittel und einen Wählschalter zum Bestimmen eines Lenkzustandes steuerbar ist. Die Lenkzustände erlauben a) eine Kurvenfahrt mit winkelgleichen aber entgegengesetzten Gelenkausschlägen der Räder der ersten und letzten Achse und den Rädern der mittleren Achse in Geradeausstellung, b) eine Schrägfahrt im sog. Hundegang mit parallel ausgerichteten Lenkeinschlägen aller Räder und c) Fahren mit den Rädern in Geradeausstellung mit gleicher bzw. ungleicher Geschwindigkeit der linken und rechten Räder. Bei diesem Fahrzeug erfolgt ein Lenkausschlag der Räder der ersten und letzten Achse immer - wenn auch unter unterschiedlichen Bedingungen - in Abhängigkeit voneinander. Eine gemeinsame Lenkung der Räder der zweiten und dritten Achse unabhängig von der ersten Achse ist bei dem bekannten Fahrzeug nicht möglich.

Der Erfindung liegt die Aufgabe zugrunde, die genannten Nachteile zu vermeiden vor allem die Störanfällikeit zu verringern, Zwangsläufigkeit beim Umschalten von einem auf den anderen Fahrzustand zu erreichen und Gewicht einzusparen.

Diese Aufgabe wird bei einer Vorrichtung zur Lenkungsumschaltung bei einem Fahrzeugkran der eingangs beschriebenen Art gelöst durch eine zentrale Umschalteinheit, die mit jeder Achsanordnung über je eine starre Lenkstange verbunden ist, wobei durch die Umschalteinheit
- in einem Schaltzustand die Lenkstangen der vorderen und der hinteren Achsanordnung formschlüssig miteinander verbunden sind und die Lenkstange der mittleren Achsanordnung formschlüssig mit einem Rahmenteil verbunden ist
- und in einem anderen Schaltzustand die Lenkstange der vorderen Achsanordnung keine Wirkverbindung zu einer der anderen Achsanordnungen aufweist und die Lenkstangen der mittleren und der hinteren Achsanordnung - ohne Anbindung an ein Rahmenteil - für sich formschlüssig verbunden sind.

Durch die eine zentrale Umschalteinrichtung kann das Umschalten von einem in den anderen Fahrzustand von einer Stelle aus erfolgen, und zwar sowohl von der Fahrerkabine als auch vom Oberwagen aus, in denen jeweils das Lenkrad und ein Meisterschalter für die Separatlenkung vorhanden sind. Das Umschalten von der Stelle aus, an der auch die Achsen gelenkt werden, ist äußerst zeitsparend und erfordert keine weitere Bedienungsperson.

Vorteilhafte Weiterbildungen der Erfindung sind in den Unteransprüchen beschrieben. So weist die Umschalteinrichtung vorteilhafterweise ein feststehendes Bauteil und je einen Hebel für jede Lenkstange auf. Die Hebel und das Bauteil sind um die Achse des Bauteils drehbar und über Formstücke, dem Fahrzustand entsprechend, koppelbar. Das Verschieben der Hebel in der Achse des festen Bauteils erfolgt vorzugsweise durch eine mittelbar oder unmittelbar am Fahrzeugrahmen befestigte Verstelleinrichtung, die auch unmittelbar mit dem feststehenden Bauteil verbunden sein kann. Um die für die Straßenfahrt notwendige Sicherheit zu gewährleisten, wird die Schaltstellung für die Straßenfahrt durch eine mechanische Feder der Verstelleinrichtung bewirkt, deren Kraft zum Umschalten in den Kranbetrieb durch einen Druckmittelzylinder überwunden wird. Um eine eindeutige, zwangsläufige Umschaltung zu erreichen, sind die in Achsrichtung des feststehenden Bauteils verschiebbaren Hebel mit einer Kopplung versehen, die wohl ein gegenseitiges Verschwenken erlaubt, aber ein gegenseitiges axiales Verschieben verhindert.

Um das Umschalten zu erleichtern, sind die Formstücke des feststehenden Bauteils und der Hebel mit zurückversetzten Nuten versehen, die eine Zwischenstellung beim Umschalten erlauben. Beim Umschalten von Straßenfahrt in den Kranbetrieb kann bei der Zwischenstellung die Fixierung der mittleren Achse bzw. Achsgruppe aufgehoben werden, während die hintere Achse mit der vorderen Achsgruppe noch gekoppelt ist. Während dieser Zwischenstellung kann die dritte Achse mit Hilfe der Separatlenkung der Stellung der vierten Achse angepaßt werden. Ist diese Stellung erreicht, erfolgt der zweite Teilschritt der Umschaltung, bei dem die hintere Achse von der vorderen Achsgruppe gelöst und mit der mittleren Achse gekoppelt wird.

Ein Ausführungsbeispiel der erfindungsgemäßen Vorrichtung ist in den Fig. 1 bis 11 dargestellt und wird im folgenden näher beschrieben. Es zeigen:
- Fig. 1: die Lenkanordnung eines 4-achsigen Fahrzeugkranes in einer schematisierten Draufsicht,
- Fig. 2 bis 5: je einen Hebel der Umschalteinrichtung in perspektivischer Darstellung, und zwar

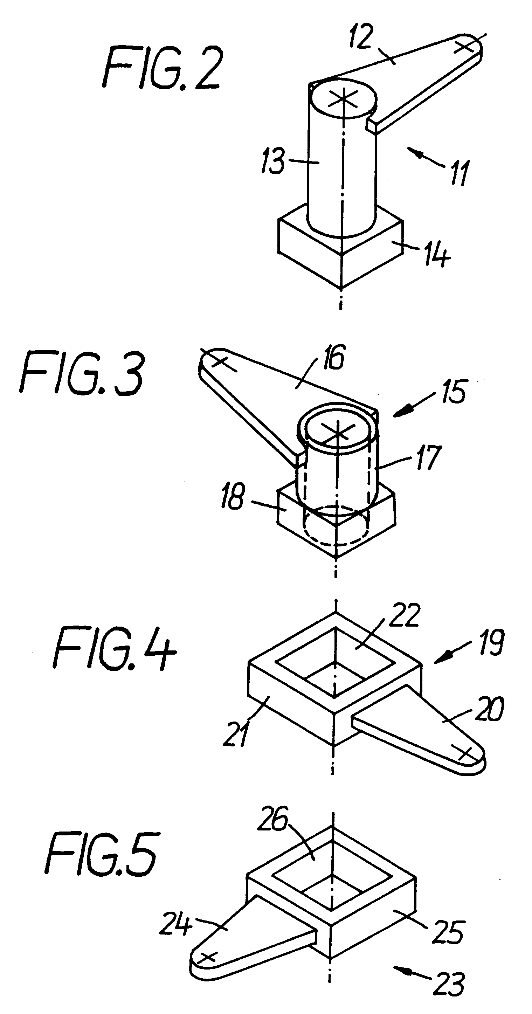

- Fig. 2: den mit dem Rahmen verbundenen Hebel,
- Fig. 3: den mit der 4. Achse verbundenen Hebel,
- Fig. 4: den mit den beiden ersten Achsen verbundenen Hebel und

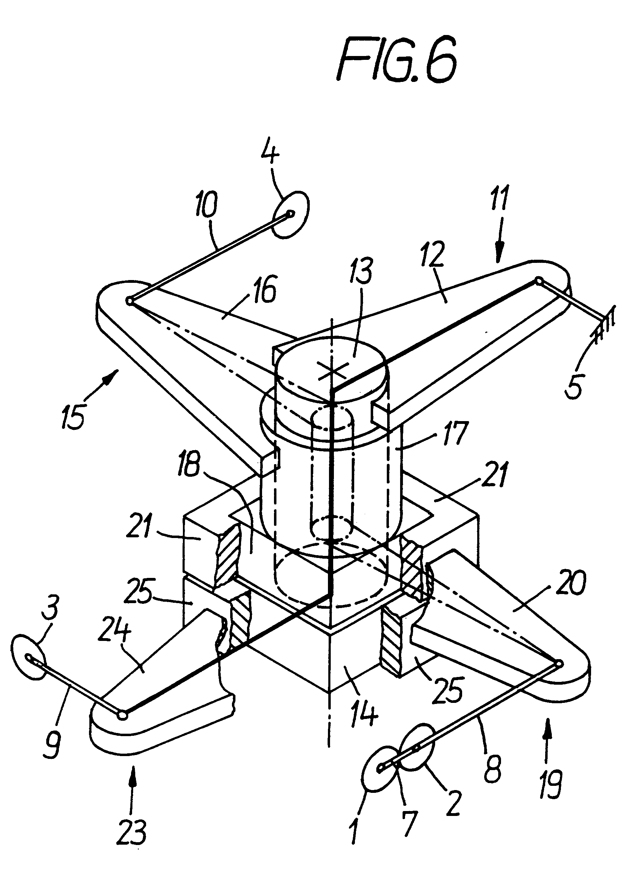

- Fig. 5: den mit der 3. Achse verbundenen Hebel,
- Fig. 6: die Umschalteinrichtung im Zustand für Straßenfahrt,

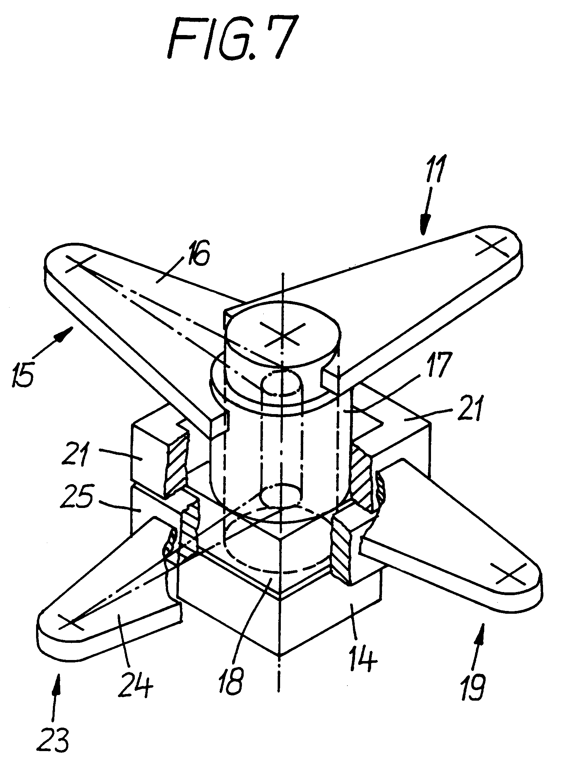

- Fig. 7: die Umschalteinrichtung im Zustand für Geländefahrt,

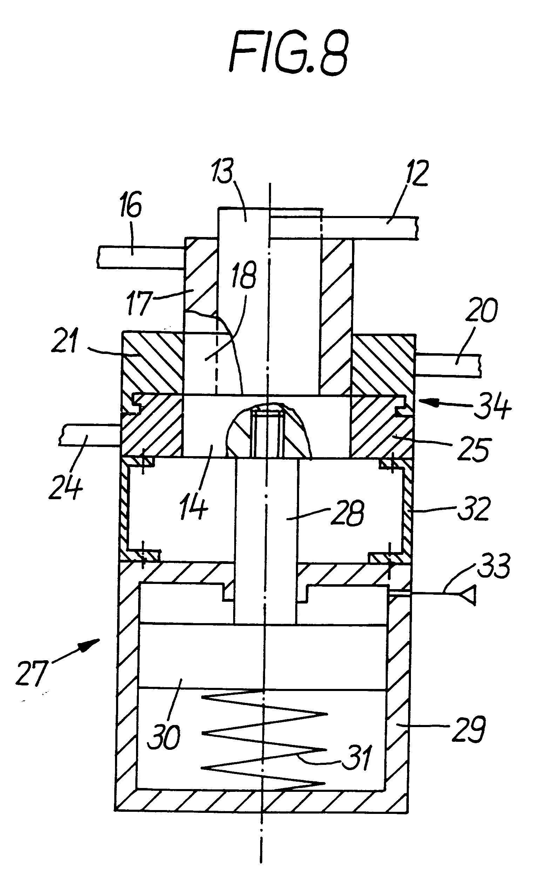

- Fig. 8: die Verstelleinrichtung in einem Querschnitt

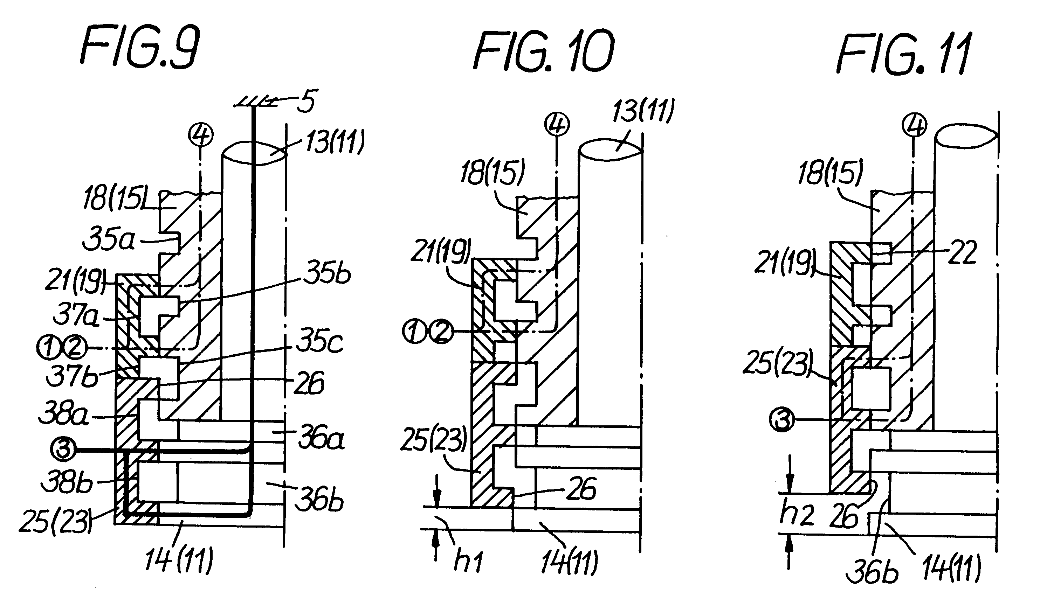

- Fig. 9 bis 11: die Formteile der Hebel in einer weitergebildeten Ausführungsform in jeweils einem halben Querschnitt, und zwar
- Fig. 9: in der Stellung für Straßenfahrt,
- Fig. 10: in einer Zwischenstellung und
- Fig. 11: in der Stellung für Geländefahrt.

Die Erfindung ist anhand eines 4-achsigen Fahrzeugkranes erläutert.

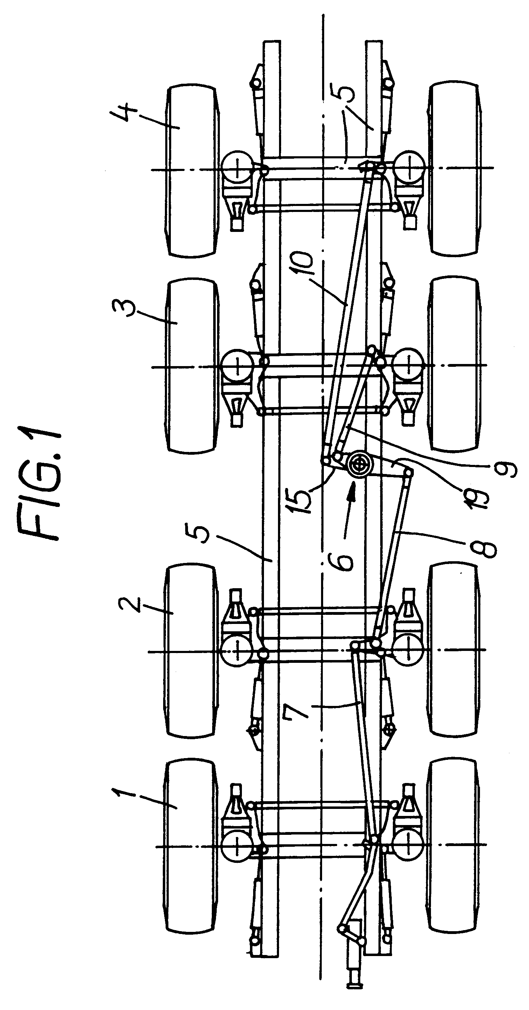

In Fig. 1 sind die Anordnung der Umschalteinheit, der Lenkstangen und das Zusammenwirken mit den vier Achsen des Fahrzeugs schematisch dargestellt. Die Lenkung der Räder der aus den beiden vorderen Achsen 1 und 2 gebildeten vorderen Achsanordnung erfolgt stets gemeinsam von einem nicht dargestellten Lenkrad aus und ist konventionell. Die Räder der Achse 3 bilden die mittlere Achsanordnung und werden entweder arretiert für die Straßenfahrt oder gemeinsam mit den Rädern der Achse 4, die die hintere Achsanordnung bildet, von einer Separatlenkung gelenkt für die Geländefahrt. Der Fahrzeugrahmen ist mit 5 bezeichnet. Der Wechsel von Straßenfahrt auf Geländefahrt erfolgt mit Hilfe einer einzigen Umschalteinheit 6. Die Lenkstange 7 stellt die Kopplung der beiden Achsen 1 und 2 dar. Die Lenkbewegungen dieser beiden Achsen werden durch die Lenkstange 8 (über den Hebel 19) zu der Umschalteinheit 6 weitergeleitet. Je nach "Schaltzustand" der Umschalteinheit 6 haben die Lenkstangen 9 und 10 unterschiedliche Funktionen. Bei Straßenfahrt werden die Räder der Achse 3 mit Hilfe der Lenkstange 9 in Geradeausstellung fixiert und die Lenkbewegung der Vorderräder mittels Lenkstange 10 auf die Achse 4 übertragen. Bei Geländefahrt erfolgt die Kopplung der Achsen 3 und 4 zur gemeinsamen Lenkung durch einen sogenannten Meisterschalter (Separatlenkung) mit Hilfe der Lenkstangen 9 und 10.

Der Aufbau im Detail und das Arbeitspinzip werden zunächst anhand der räumlichen Darstellungen erläutert:

Ein in Fig. 2 schematisch dargestellter Hebel 11 besteht im wesentlichen aus einem Hebelansatz 12, einer Hebelachse 13 und einem Formstück 14; Hebelansatz 12 und Formstück 14 sind fest mit der Hebelachse 13 verbunden. Das Formstück 14 ist hier als quadratischer Vierkant ausgeführt. Der Hebelansatz 12 dient der Befestigung am Fahrzeugrahmen 5; diese Befestigung kann durch eine Schweißung oder durch eine durch die Mittellinien angedeutete Verschraubung erfolgen. Es könnte je nach Einbaubedingungen aber auch die Hebelachse 13 direkt (unter Verzicht auf den Hebelansatz 12) mit dem Fahrzeugrahmen 5 verbunden sein.

Ein in Fig. 3 schematisch dargestellter Hebel 15 besteht im wesentlichen aus einem Hebelansatz 16 einem Führungsrohr 17, und einem Formstück 18, das in seiner Außenkontur genau dem Formstück 14 entspricht; Hebelansatz 16 und Formstück 18 sind fest mit dem Führungsrohr 17 verbunden. Der Innendurchmesser des Führungsrohres 17 entspricht dem Außendurchmesser der Hebelachse 13 von Hebel 11 und der Außendurchmesser des Führungsrohres 17 entspricht der Seitenlänge der Innenvierkante der Formstücke 14 und 18 (bei anderer Geometrie der Formstücke dem Inkreis ihrer Außenkontur). Das Formstück 18 entspricht in seiner Geometrie dem Formstück 14, d.h es ist in diesem Falle ebenfalls als Vierkant ausgeführt. Der Hebelansatz 16 ist über eine an der durch Mittellinien markierten Stelle angreifenden Lenkstange 10 mit der 4. Achse des Fahrzeugs verbunden.

Die Hebelachse 13 des Hebels 11 befindet sich im zusammengebauten Zustand (dargestellt in Fig. 6 und Fig. 7) im Führungsrohr 17 des Hebels 15, so daß der Hebel 15 (gegenüber Hebel 11) auf der Hebelachse 13 dreh- bzw. schwenkbar aber nicht längsverschiebbar ist.

Ein in Fig. 4 schematisch dargestellter Hebel 19 besteht im wesentlichen aus einem Hebelansatz 20 und einem fest mit diesem verbundenen Formstück 21. Das Formstück 21 weist eine Ausnehmung 22 auf, deren Innenkontur der Außenkontur der Formstücke 14 bzw. 18 entspricht und ist im Ausführungsbeispiel als quadratischer Innenvierkant ausgeführt. Der Hebelansatz 20 ist über eine an der durch Mittellinien markierten Stelle angreifenden Lenkstange 8 mit den beiden ersten, d.h. vorderen Achsen des Fahrzeugs verbunden. Dadurch wird die vom Lenkrad ausgehende Lenkbewegung auf den Hebel 19 übertragen, der damit bei jedem Lenkvorgang geschwenkt wird.

Ein in Fig. 5 schematisch dargestellter Hebel 23 entspricht im Aufbau dem Hebel 19 und besteht im wesentlichen aus einem Hebelansatz 24 und einem fest mit diesem verbundenen Formstück 25, das in seiner Form genau dem Formstück 21 entspricht; d.h. daß auch die Form der Ausnehmung 26 der Form der Ausnehmung 22 entspricht. Der Hebelansatz 24 ist über eine an der durch Mittellinien markierten Stelle angreifende Lenkstange 9 mit der 3. Achse des Fahrzeugs verbunden.

Die Formstücke 21 und 25 und damit die Hebel 19 und 23 sind auf den Formstücken 14 und 18 bzw. dem Außendurchmesser des Führungsrohres 17 in Längsrichtung der Hebelachse 13 verschiebbar.

Die Ausrichtung der Hebel 11, 15, 19 und 23 in der Bildebene entspricht der in Fig. 6 und Fig. 7 gewählten Darstellung des Ausführungsbeispiels. Diese Darstellung dient der besseren Übersichtlichkeit und entspricht nicht der tatsächlichen Einbaulage der einzelnen Hebel zueinander. Die Hebelachse 13 ist dabei bezogen auf das Fahrzeug vertikal angeordnet, alle Hebelansätze verlaufen horizontal. Die tatsächlichen geometrischen Abmessungen und Winkelstellungen der Hebelansätze ergeben sich aus den im Einzelfall vorliegenden Einbauverhältnissen.

Fig. 6 und Fig. 7 sind schematische Darstellungen des Zusammenbauzustandes, wobei Fig. 6 dem Fahrzustand "Straßenfahrt" und Fig. 7 dem Fahrzustand "Geländefahrt" entspricht. Der Hebel 11 hat, da fest mit dem Rahmen des Fahrzeuges verbunden, in beiden Fahrzuständen dieselbe Stellung; er führt keine Eigenbewegung - weder in der Höhe noch um seine eigene Achse - aus. Die beiden Hebel 19 und 23 sind (in Fig. 8 dargestellt) derart formschlüssig miteinander verbunden, daß sie eine Längsbewegung in Richtung der Hebelachse 13 nur gemeinsam ausführen können, jedoch gegenseitig verdreh- bzw. schwenkbar sind. Sie können durch eine Verstelleinheit 27 gemeinsam aus der in Fig. 6 dargestellten Position für die "Straßenfahrt" in die in Fig. 7 dargestellte Position für die "Geländefahrt" verschoben werden und umgekehrt.

Für die "Straßenfahrt" sind, wie in Fig. 6 dargestellt, die Hebel 19 und 23 in der unteren Position. Dadurch sind die Hebel 11 und 23 über die Formstücke 14 und 25 formschlüssig miteinander verbunden, was zur Folge hat, daß der Hebel 23 arretiert wird, d.h. nicht schwenkbar ist. Damit wird die 3. Achse des Fahrzeugs zur Starrachse. Der Kraftfluß ist als dick ausgezogene Linie dargestellt. Außerdem sind für diesen Fahrzustand die Hebel 15 und 19 über die Formstücke 18 und 21 formschlüssig miteinander verbunden. Dadurch macht der Hebel 15 für die 4. Achse die durch die vom Lenkrad verursachte Schwenkbewegung des Hebels 19 mit. Der Kraftfluß ist als strichpunktierte Linie dargestellt.

Für die "Geländefahrt" sind, wie in Fig. 7 dargestellt, die Hebel 19 und 23 in der oberen Position. Dadurch besteht zwischen den Hebeln 11 und 23 keine Verbindung, die eine Schwenkbewegung des Hebels 23 verhindert. Die Hebel 15 und 23 sind über die Formstücke 18 und 25 formschlüssig miteinander verbunden. Der Kraftfluß zwischen den beiden Hebeln ist als strichpunktierte Linie dargestellt. Der Hebel 19 kann die von der Lenkbewegung ausgelöste Schwenkbewegung ungehindert und vor allem ohne einen anderen Hebel zu bewegen ausführen. Dadurch sind einerseits die beiden vorderen Fahrzeugachsen vom Lenkrad aus lenkbar und andererseits davon unabhängig die beiden hinteren Fahrzeugachsen durch eine zweite Lenkeinrichtung gemeinsam entweder gleichsinnig wie die beiden vorderen Achsen (Verkleinerung der Lenkkreises) oder gegensinnig (Vergrößerung der Manövrierfähigkeit durch den sog. Hundegang).

Die Hebel 19 und 23 mit ihren Formstücken 21 und 25 sind in Richtung der Lenkachse 13 von einer Verstelleinrichtung 27 bewegbar, die aus einer Kolbenstange 28, einem Druckmittelzylinder 29, einem Kolben 30 und einer Druckfeder 31 besteht.

An der Unterseite des Formstücks 14 des Hebels 11 ist die Kolbenstange 28 des Druckmittelzylinders 29 z.B. durch eine Gewindeverbindung befestigt. Zwischen dem Kolben 30 und dem Zylinderboden ist eine Druckfeder 31 angeordnet, die den Kolben 30 mit der Kolbenstange 28 aus dem Druckmittelzylinder 29 herauszudrücken versucht. An dem hohlen Formstück 25 ist nach unten eine schalenförmige Verlängerung bzw. ein Zwischenstück 32 angeordnet, das mit seinem unteren Ende wiederum an dem Druckmittelzylinder 29 befestigt ist. Zwischen dem Kolben 30 und dem Zylinderdeckel ist ein Druckmittelanschluß 33 vorgesehen.

Die Formstücke 21 und 25 weisen über einen Teil ihres Umfangs eine Nutverbindung 34 auf, die ein Drehen beider Formstücke relativ zueinander zuläßt, aber eine axiale Bewegung beider Formstücke zueinander verhindert.

In dem Fahrzustand "Straßenfahrt" bewirkt die Druckfeder 31, daß der Druckmittelzylinder 29 relativ zum Kolben 30, der über die Kolbenstange 28 an der fest angeordneten Hebelachse 13 abgestützt ist, nach unten gedrückt wird. Durch den Druckmittelzylinder 29 werden die Formstücke 25 und 21 über das Zwischenstück 32 auf die Formstücke 14 bzw. 18 der Hebel 11 bzw. 15 heruntergezogen und bilden mit ihnen den im Zusammenhang mit der Fig. 6 beschriebenen verdrehfesten Formschluß.

Wird der Druckmittelzylinder 29 über den Anschluß 33 mit Druckmittel beaufschlagt, so wird er gegen die in bezug auf den Rahmen 5 feststehenden Kolben 30 entgegen der Kraft der Druckfeder 31 nach oben gehoben. Über das Zwischenstück 32 werden auch die beiden Formstücke 25 und 21 nach oben geschoben. Dadurch ergibt sich der im Zusammenhang mit der Fig. 7 beschriebene verdrehfesten Formschluß zwischen den Hebeln 15 und 23 und die in bezug auf die dritte und vierte Achse freie Drehbarkeit des Hebels 19.

Eine vorteilhafte Weiterbildung der Erfindung besteht darin, die Formstücke 14, 18, 21 und 25 zur Erhöhung der Umschaltsicherheit auch unter schwierigen Bedingungen derart auszubilden, daß der Umschaltvorgang in zwei Schritten vorgenommen werden kann. Dazu weisen die Formstücke 14 und 18, wie in den Fig. 9 bis 11 schematisch dargestellt, von der eigentlichen Profilfläche zurückversetzte Umfangsnuten 35a,b,c bzw. 36a,b auf. Umgekehrt sind die Ausnehmungen 22, 26 der Formstücke 21, 25 mit Innennuten 37a,b,c bzw. 38a,b versehen.

Aus der in Fig. 9 dargestellten Position, die der Straßenfahrt entspricht (Achsen 1, 2 und 4 lenkbar; Achse 3 fest) erfolgt zunächst ein erster Schaltschritt, bei dem die Hebel 19 und 23 um eine Höhe h1 bewegt werden. In dieser Zwischenstellung, dargestellt in Fig. 10, ist die Fahrzeugachse 3 mechanisch gelöst; die Fahrzeugachsen 1, 2 und 4 sind nach wie vor für die Suche nach der "Geradeausstellung", in der sich die Räder der Fahrzeugachse 3 ja noch befinden, durch das Lenkrad lenkbar. Nach Erreichen der "Geradeaus-Stellung" wird der zweite Teilschritt ausgeführt, bei dem die Hebel 19 und 23 insgesamt um eine Höhe h2 bewegt werden. Dadurch wird die Fahrzeugachse 4 vom Lenkrad gelöst und mit der dritten Achse gekoppelt. Nun kann mit Hilfe des Meisterschalters die vom Lenkrad unabhängige Separatlenkung der miteinander gekoppelten dritten und vierten Achse erfolgen.

Der in den Fig. 6 und 7 eingezeichnete Kraftfluß findet sich auch in den Fi. 9 bis 11.

## Patentansprüche

1. Vorrichtung zur Lenkungsumschaltung bei einem Fahrzeugkran mit vier oder mehr Achsen, die eine vordere, eine mittlere und eine hintere Achsanordnung bilden, wobei jede Achsanordnung eine lenkbare Achse oder mehrere gemeinschaftlich lenkbare Achsen aufweist und wobei entweder die vordere und die hintere Achsanordnung gemeinsam lenkbar sind und die mittlere Achsanordnung auf Gerdeausstellung festgestellt ist oder die vordere Achsanordnung für sich und die mittlere und die hintere Achsanordnung - unabhängig von der vorderen Achsanordnung - gemeinsam lenkbar sind;
**gekennzeichnet**
durch eine zentrale Umschalteinheit (6), die mit jeder Achsanordnung (1/2; 3; 4) über eine starre Lenkstange (8; 9; 10) verbunden ist, wobei durch die Umschalteinheit (6)
- in einem Schaltzustand
die Lenkstangen (8; 10) der vorderen und der hinteren Achsanordnung (1/2 bzw. 4) formschlüsig miteinander verbunden sind und die Lenkstange (9) der mittleren Achsanordnung (4) formschlüssig mit einem Rahmenteil (5) verbunden ist
- und in einem anderen Schaltzustand
die Lenkstange (8) der vorderen Achsanordnung (1/2) keine Wirkverbindung zu einer der anderen Achsanordnungen (3; 4) aufweist und die Lenkstangen (9; 10) der mittleren und der hinteren Achsanordnung (3; 4) - ohne Anbindung an ein Rahmenteil (5) - formschlüssig miteinander verbunden sind.

2. Vorrichtung nach Anspruch 1, dadurch gekennzeichnet, daß die Umschalteinheit (6) im wesentlichen aufgebaut ist aus einem fest mit dem Rahmen (5) des Fahrzeugkranes verbundenen Bauteil (11), einem Hebel (15), der mit der der hinteren Achsanordnung (4) zugeordneten Lenkstange (10) gelenkig verbunden ist, einem Hebel (19), der mit der der vorderen Achsanordnung (1, 2) zugeordneten Lenkstange (8) gelenkig verbunden ist, und einem Hebel (23), der mit der der mittleren Achsanordnung (3) zugeordneten Lenkstange (9) verbunden ist.

3. Vorrichtung nach Anspruch 2 dadurch gekennzeichnet, daß das mit dem Rahmen (5) verbundene Bauteil (11) eine Hebelachse (13) und ein Formstück (14) aufweist, daß auf dieser Hebelachse (13) der Hebel (15) mit einem Führungsrohr (17) und einem Formstück (18), das die gleiche Außenkontur wie das Formstück (14) hat, dreh- bzw. schwenkbar gelagert ist, und daß die Hebel (19 und 23) mit je einem Formstück (21 bzw. 25) mit Ausnehmungen (22 bzw. 26), deren Kontur der Außenkontur der Formstücke (14 und 18) entspricht, in Längsrichtung der Hebelachse (13) verschiebbar auf dem Hebel (15) angeordnet ist.

4. Vorrichtung nach einem der Ansprüche 1 bis 3, dadurch gekennzeichnet, daß die Umschalteinrichtung(6) durch eine mittelbar oder unmittelbar am Fahrzeugrahmen (5) befestigte Verstelleinrichtung (27) betätigbar ist.

5. Vorrichtung nach Anspruch 4, dadurch gekennzeichnet, daß die Verstelleinrichtung (27) zum Verschieben der Hebel (19, 23) vorgesehen ist.

6. Vorrichtung nach Anspruch 4 oder 5, dadurch gekennzeichnet, daß die Verstelleinrichtung (27) als mit einer Druckfeder (31) versehener Druckmittelzylinder (29) ausgebildet ist.

7. Vorrichtung nach Anspruch 6, dadurch gekennzeichnet, daß die Kolbenstange (28) des Druckmittelzylinders (29) fest mit der Hebelachse (13) des Bauteils (11) verbunden ist und die Hebel (19, 23) ggf. über ein Zwischenstück (32) mit dem Druckmittelzylinder (29) verbunden sind.

8. Vorrichtung nach einem der Ansprüche 2 bis 7, dadurch gekennzeichnet, daß die Hebel (19, 23) mit einer ein gegenseitiges Schwenken erlaubenden und ein gegenseitiges Verschieben in Richtung der Hebelachse (13) verhindernden Kopplung (34) versehen sind.

9. Vorrichtung nach einem der Ansprüche 3 bis 8, dadurch gekennzeichnet, daß die Formstücke (14, 18) des Bauteils (11) bzw. des Hebels (15) und die Ausnehmungen (22, 26) der Hebel (19 bzw. 23) eine Aufhebung des Kopplungszustandes erlaubende, zurückversetzte Nuten (35a,b,c bis 38a,b) aufweisen.

## Claims

1. Device for changing over the steering of a self-propelling crane with four or more axles forming a front, central and rear axle arrangement, each axle arrangement having a steerable axle or several jointly steerable axles, in which case either the front and rear axle arrangement may be jointly steered and the central axle arrangement is fixed in a position for travel straight ahead, or the front axle arrangement may be steered independently and the central and rear axle arrangements may be jointly steered, independently of the front axle arrangement, characterised by a central switchover unit (6), which is connected to each axle arrangement (1/2; 3; 4) via a rigid steering link (8; 9; 10), wherein, by means of the switchover unit (6),
- in one switching position
the steering links (8; 10) of the front and rear axle arrangements (1/2 and 4 respectively) are connected positively to one another and the steering link (9) of the central axle arrangement (4) is connected positively to a frame part (5);
- in another switching position
the steering link (8) of the front axle arrangement (1/2) has no working connection to one of the other axle arrangements (3; 4) and the steering links (9; 10) of the central and rear axle arrangements (3; 4) are connected positively to one another without attachment to a frame part (5).

2. Device according to Claim 1, characterised in that the switchover unit (6) essentially comprises a structural part (11) rigidly connected to the frame (5) of the self-propelling crane, a lever (15), which is hinged to the steering link (10) allocated to the rear axle arrangement (4), a lever (19), which is hinged to the steering link (8) allocated to the front axle arrangement (1, 2), and a lever (23), which is connected to the steering link (9) allocated to the central axle arrangement (3).

3. Device according to Claim 2, characterised in that the structural part (11) connected to the frame (5) has a lever axis (13) and a shaped part (14); that the lever (15) is rotatably or pivotally mounted on this lever axis (13) with a guide tube (17) and a shaped part (18), which has the same external contour as the shaped part (14); and that the levers (19 and 23) are arranged each with a shaped part (21 and 25 respectively) with recesses (22 and 26 respectively), the contour of which corresponds to the external contour of the shaped parts (14 and 18), to slide on the lever (15) in the longitudinal direction of the lever axis (13).

4. Device according to one of Claims 1 to 3, characterised in that the switchover unit (6) may be operated by a displacement means (27) fastened indirectly or directly to the vehicle frame (5).

5. Device according to Claim 4, characterised in that the displacement means (27) is provided to shift the levers (19, 23).

6. Device according to Claim 4 or 5, characterised in that the displacement means (27) is constructed as a pressure medium cylinder (29) fitted with a pressure spring (31).

7. Device according to Claim 6, characterised in that the piston rod (28) of the pressure medium cylinder (29) is rigidly connected to the lever axis (13) of the structural part (11) and the levers (19, 23) are connected to the pressure medium cylinder (29) optionally via a spacer (32).

8. Device according to one of Claims 2 to 7, characterised in that the levers (19, 23) are provided with a coupling (34), which permits reciprocal pivoting movements and prevents reciprocal sliding movements in the direction of the lever axis (13).

9. Device according to one of Claims 3 to 8, characterised in that the shaped parts (14, 18) of the structural part (11) or of the lever (15) and the recesses (22, 26) of the levers (19 or 23) have set-back grooves (35a,b,c to 38a,b) permitting the coupling state to be suspended.

## Revendications

1. Dispositif pour inverser la direction d'une grue automotrice comportant quatre essieux, ou plus, formant un ensemble d'essieux avant, du milieu et arrière, étant entendu que chaque ensemble d'essieu comporte un essieu orientable, ou plusieurs essieux pouvant être orientés ensemble, et étant entendu que, soit l'ensemble d'essieu avant et l'ensemble d'essieu arrière peuvent être orientés en même temps et l'ensemble d'essieu du milieu est rendu fixe en position droite, soit l'ensemble d'essieu avant pour sa part, et l'ensemble d'essieu du milieu et l'ensemble d'essieu arrière, d'autre part, peuvent être orientés en même temps - indépendamment de l'ensemble d'essieu avant -,
caractérisé
par une unité centrale d'inversion (6), reliée à chaque ensemble d'essieu (1/2; 3; 4), par l'intermédiaire d'une barre de direction rigide (8; 9; 10), étant entendu que, par l'unité d'inversion (6),
- dans l'un des états d'inversion, les barres de direction (8;10) de l'ensemble d'essieu avant et de l'ensemble d'essieu arrière (respectivement 1/2 et 4) sont reliées entre elles par conjugaison de formes et que la barre de direction (9) de l'ensemble d'essieu du milieu est reliée, avec conjugaison de formes, à une pièce du châssis (5),
- et, dans un autre état d'inversion, la barre de direction (8) de l'ensemble d'essieu avant (1/2) ne présente pas de liaison active avec l'un des autres ensembles d'essieux (3;4), et les barres de direction (9;10) de l'ensemble d'essieu du milieu et de l'ensemble formant l'essieu arrière ( 3; 4) sont reliées entre elles, avec conjugaison de formes - sans être reliées à une pièce du châssis -.

2. Dispositif suivant la revendication 1, caractérisé en ce que l'unité d'inversion (6) est essentiellement construite à partir d'une pièce de construction (11) reliée de façon fixe au châssis (5) du véhicule, d'un levier (15), relié par articulation à la barre de direction (10) associée à l'ensemble (4) d'essieu arrière, d'un levier (19), relié par articulation à la barre de direction (8) associée à l'ensemble (1, 2) d'essieu avant, et d'un levier (23), relié par articulation à la barre de direction (9) associée à l'ensemble (3) d'essieu du milieu.

3. Dispositif suivant la revendication 2, caractérisé en ce que la pièce de construction (11) reliée au châssis (5) présente un axe de levier (13) et une pièce de forme (14), en ce que, sur cet axe de levier (13), est monté, tournant ou pivotant, le levier (15) comportant un tube-guide (17) et une pièce de forme (18), qui présente le même contour extérieur que la pièce de forme (14), et en ce que les leviers (19 et 23), comportant chacun une pièce de forme (respectivement 21 et 25), comportant elles-mêmes des évidements respectifs (22 et 26) dont le contour correspond au contour extérieur des pièces de forme (14 et 18), sont disposés, sur le levier (15), coulissant suivant la direction longitudinale de l'axe de levier (13).

4. Dispositif suivant l'une des revendications 1 à 3, caractérisé en ce que l'unité d'inversion (6) peut être actionnée, directement ou indirectement, par un dispositif de positionnement (27) fixé au châssis (5) du véhicule.

5. Dispositif suivant la revendication 4, caractérisé en ce que le dispositif de positionnement (27) est prévu pour faire coulisser les leviers (19, 23).

6. Dispositif suivant la revendication 4 ou la revendication 5, caractérisé en ce que le dispositif de positionnement (27) est réalisé sous la forme d'un vérin à fluide sous pression (29) équipé d'un ressort de compression (31).

7. Dispositif suivant la revendication 6, caractérisé en ce que la tige de piston (28) du vérin à fluide sous pression (29) est reliée de façon fixe à l'axe de levier (13) de la pièce de construction (11), et que les leviers (19, 23) sont reliés au vérin à fluide sous pression (29), le cas échéant par l'intermédiaire d'une pièce intercalaire (32).

8. Dispositif suivant l'une des revendications 2 à 7, caractérisé en ce que les leviers (19, 23) sont munis d'un accouplement (34) permettant un pivotement de l'un par rapport à l'autre et interdisant un coulissement de l'un par rapport à l'autre dans la direction de l'axe de levier (13).

9. Dispositif suivant l'une des revendications 3 à 8, caractérisé en ce que les pièces de forme respectives (14, 18) de la pièce de construction (11) et du levier (15), et les évidements respectifs (22, 26) des leviers (19 et 23) présentent respectivement des rainures en retrait (35a, b, c jusqu'à 38a, b), permettant de faire cesser l'état d'accouplement.
